# EUROPÄISCHE PATENTSCHRIFT

(11) **EP 2 280 840 B1**
(45) Veröffentlichungstag und Bekanntmachung des Hinweises auf die Patenterteilung: **12.03.2014**
(21) Anmeldenummer: 08748701.3
(22) Anmeldetag: 31.03.2008
(51) Int. Cl.: B60J 7/185

(54) **VERDECK FÜR EIN KRAFTFAHRZEUG, INSBESONDERE CABRIOLET-FAHRZEUG, MIT EINEM FALTBAREN DACH**
SOFT TOP FOR A MOTOR VEHICLE, PARTICULARLY A CONVERTIBLE, COMPRISING A FOLDING ROOF
CAPOTE POUR UN VÉHICULE, NOTAMMENT UN VÉHICULE DÉCAPOTABLE, DOTÉ D'UN TOIT PLIANT

(30) Priorität: 02.04.2007 DE 102007015705
(43) Veröffentlichungstag der Anmeldung: 09.02.2011
(73) Patentinhaber: Wilhelm Karmann GmbH, 49084 Osnabrück (DE); Valmet Automotive Oy, 23500 Uusikaupunki (FI)
(72) Erfinder: HABACKER, Norbert, 49565 Bramsche (DE)
(74) Vertreter: Kronthaler, Schmidt & Coll.
(86) Internationale Anmeldenummer: PCT/DE2008/000525
(87) Internationale Veröffentlichungsnummer: WO 2008/119333

(56) Entgegenhaltungen:
- EP-A- 0 763 439
- EP-A- 0 884 208
- DE-C1- 19 507 431
- FR-A- 2 791 007
- FR-A- 2 870 788

## Beschreibung

Die Erfindung betrifft ein Verdeck für ein Kraftfahrzeug, insbesondere Cabriolet-Fahrzeug, mit einem faltbaren Dach, welches mittels eines Verdeckgestänges zwischen einer Schließstellung, in der es an einem Windschutzscheibenrahmen festlegbar ist, und einer Öffnungsstellung, in der es in einer heckseitigen Ablageposition abgelegt ist, verlagerbar ist, nach der im Oberbegriff des Patentanspruches 1 näher definierten Art.

Aus der Praxis bekannte Verdecke für Cabriolet-Fahrzeuge weisen in der Regel eine Verriegelungsvorrichtung an der Dachspitze auf, welche zum Festlegen des Daches in geschlossenem Verdeckzustand an einem Windschutzscheibenrahmen dient. Zur Arretierung des Verdecks in geöffnetem Zustand ist üblicherweise eine separate Arretiervorrichtung am Fahrzeugaufbau vorgesehen, mit der das als Paket abgelegte Verdeck gehalten wird.

Durch den Einsatz von einem Antrieb zur Festlegung des Verdecks an dem Windschutzscheibenrahmen und einem weiteren Antriebs zur Festlegung des Verdecks in einer Ablageposition ist der apparative und sensorische Aufwand dabei nachteilhafterweise erheblich.

Ein Verdeck der eingangs genannten Art ist aus der EP 0 763 439 B1 bekannt. Das insbesondere für ein Cabriolet-Fahrzeug vorgesehene Verdeck wird in seiner Schließstellung mittels einer Verriegelungsvorrichtung an einem angrenzenden Windschutzscheibenrahmen in Lage gehalten und ist nach Lösen der Verriegelungsvorrichtung in eine heckseitige Ablagestellung verlagerbar, wobei die Verriegelungsvorrichtung ein an einem vorderen Verdeckabschnitt angeordnetes Verriegelungsorgan mit einem Verschlusshaken umfasst. In seiner zurückgeklappten heckseitigen Ablagestellung wird das Verdeck mittels einer Arretiereinrichtung fixiert, wobei das am vorderen Verdeckabschnitt angeordnete Verriegelungsorgan mit dem Verschlusshaken zugleich ein Funktionsteil der heckseitigen Arretiereinrichtung bildet.

Nachteilhafterweise ist die Verwendung eines derartigen Verdecks mit einer Verriegelungsvorrichtung mit einem Verschlusshaken, welcher sowohl ein Funktionsteil bei der Festlegung des Verdecks in einer Schließstellung als auch bei einer Festlegung des Verdecks in einer Öffnungsstellung bildet, schwer an den in dem betreffenden Bereich sehr geringen Bauraum anpassbar. Die Anordnung des jeweiligen Gegenelements zu dem Verschlusshaken der Verriegelungsvorrichtung sowohl in einer Öffnungsstellung als auch in einer Schließstellung des Verdecks ist bei dem vorgeschlagenen Verdeck weitestgehend vorgegeben und somit nur schwer mit den teilweise fest vorgegebenen Bauraumbedingungen vereinbar.

Aus der FR 2 791 007 A1 ist ein Faltdach für ein Fahrzeug bekannt, bei welchem ein vorderes Dachelement mittels eines Verriegelungselements an einem Windschutzscheibenrahmen festlegbar ist. Mittels eines weiteren Verriegelungselements ist ein hinteres Dachelement karosseriefest festlegbar. Die Verriegelungselemente sind über einen gemeinsamen Motor betätigbar.

Es ist somit Aufgabe der vorliegenden Erfindung, ein Verdeck für ein Kraftfahrzeug, insbesondere Cabriolet-Fahrzeug, nach der eingangs genannten Art zu schaffen, bei dem eine sichere Arretierung des Verdecks in geschlossenem und geöffnetem Zustand des Verdecks mittels eines möglichst einfachen Mechanismus erfolgt und zugleich eine möglichst gute Anpassung der Festlegung des Verdecks sowohl in geschlossenem als auch in geöffnetem Zustand des Verdecks an Bauraumbedingungen möglich ist.

Diese Aufgabe wird bei einem Verdeck für ein Kraftfahrzeug, insbesondere Cabriolet-Fahrzeug, der eingangs genannten Art mit den Merkmalen des kennzeichnenden Teils des Patentanspruches 1 gelöst.

Die Erfindung sieht ein Verdeck für ein Kraftfahrzeug, insbesondere Cabriolet-Fahrzeug, mit einem faltbaren Dach vor, welches mittels eines Verdeckgestänges zwischen einer Schließstellung, in der es an einem Windschutzscheibenrahmen festlegbar ist, und einer Öffnungsstellung, in der es in einer heckseitigen Ablageposition abgelegt ist, verlagerbar ist, wobei zur Festlegung an dem Windschutzscheibenrahmen in Schließstellung eine Verriegelungsvorrichtung mit einem Antriebsorgan und wenigstens einem hiermit über ein Gestänge verbundenen Verschlusshaken vorgesehen ist, und wobei zur Arretierung des Dachs in der heckseitigen Ablageposition eine Arretiervorrichtung vorgesehen ist, wobei die Arretiervorrichtung mit wenigstens einem Arretierelement und einem aufbauseitigen Gegenlager ausgebildet ist, und wobei sowohl die Arretiervorrichtung als auch die Verriegelungsvorrichtung von dem Antriebsorgan betätigbar ist, und wobei das Arretierelement der Arretiervorrichtung mittels des Gestänges der Verriegelungsvorrichtung von dem Antriebsorgan betätigbar ist.

Erfindungsgemäß ist das Antriebsorgan wenigstens annähernd mittig bezogen auf die Fahrzeugbreite an einem vorderen Ende des Verdecks angeordnet, wobei das Arretierelement mittels einer von dem Antriebsorgan betätigbaren Koppelstange betätigbar ist, welche an das wenigstens annähernd in Verdeckquerrichtung verlaufende, das Arretierelement antreibende Gestänge angekoppelt ist.

Bei einem erfindungsgemäßen Verdeck ist der Arretierhaken über einen einfachen Mechanismus an das Antriebsorgan angebunden und die Arretiervorrichtung kann gegenüber herkömmlichen Verdecken in einen einer Fahrzeugseite zugewandten Bereich verlagert werden, wodurch mehr Platz beispielsweise für die Schaffung einer mobilen Hutablage geschaffen werden kann.

Bei einem erfindungsgemäß ausgebildeten Verdeck besteht eine große Freiheit sowohl in der Anordnung der Verriegelungsvorrichtung mit dem entsprechenden Gegenelement an dem Windschutzscheibenrahmen als auch in der Anordnung der Arretiervorrichtung mit dem entsprechenden aufbauseitigen Gegenlager, da die Position des zur Festlegung des Verdecks an dem Windschutzscheibenrahmen vorgesehene Verschlusshakens unabhängig von der Position des zur Festlegung des Verdecks in seiner Ablageposition vorgesehenen Arretierelements gewählt werden kann. Das erfindungsgemäße Verdeck kann somit an gegenenfalls vorliegende bauräumliche Vorgaben und Einschränkungen flexibel und einfach angepasst werden.

Durch die Betätigung sowohl des Verschlusshakens als auch des Arretierhakens durch einen gemeinsamen Antrieb ist der apparative Aufbau entsprechend gering.

Bei der Festlegung des Verdecks in seiner hinteren Ablageposition kann bei der vorliegenden Festlegung durch die aufbauseitige Festlegung eine hohe Steifigkeit erzielt werden, wodurch eine sehr sichere Ablage ermöglicht wird.

In einer konstruktiv einfachen Ausgestaltung des karosseriefesten mit dem Arretierelement zusammenwirkenden Gegenlager ist das Gegenlager als eine Baueinheit mit einem Hauptlager eines Verdeckgestänges ausgebildet ist, wobei das Arretierelement in der heckseitigen Ablageposition in dem Gegenlager festlegbar ist.

Eine einfache Festlegung des Verdecks in seiner hinteren Ablageposition kann erreicht werden, wenn das Arretierelement, welches in einer vorteilhaften Ausbildung der Erfindung als Arretierhaken ausgebildet ist, ein bolzenartiges Element aufweist, welche in Ablageposition des Verdecks in eine Ausnehmung des Gegenlagers eingreift und diesen in dem Gegenlager festlegt.

Es ist vorteilhaft, wenn die Koppelstange im Wesentlichen koaxial zu einer Treibstange des Gestänges, mit der der Verschlusshaken gelenkig verbunden ist, angeordnet ist.

In einer weiteren Ausgestaltung der Erfindung kann es vorgesehen sein, dass an dem Arretierhaken eine wenigstens annähernd in Fahrzeuglängsrichtung verlaufende Verbindungsstange angelenkt ist, die an ihrem dem Arretierhaken abgewandten Ende ein Verriegelungselement aufweist, mittels dem zwei Dachteile miteinander verbindbar sind. Somit können in vorteilhafter Weise bei entsprechender Gestaltung sämtliche Verschlüsse von Dachteilen über das insbesondere als Mittenantrieb ausgebildete Antriebsorgan angesteuert werden.

In einer alternativen Ausgestaltung der Erfindung kann das Verdeck manuell über ein entsprechend ausgebildetes Antriebsorgan betätigt werden.

Weitere Vorteile und vorteilhafte Ausführungen eines Verdecks nach der Erfindung ergeben sich aus den Patentansprüchen, den Zeichnungen und der Beschreibung.

Nachfolgend ist ein vorteilhaftes Ausführungsbeispiel anhand der Zeichnung prinzipmäßig beschrieben.

Es zeigt:
- Fig. 1: eine vereinfachte Darstellung eines Cabriolet-Fahrzeugs mit einem Verdeck in einer Schließstellung;
- Fig. 2: eine vereinfachte Darstellung eines Antriebsmechanismus zur Festlegung des Verdecks in einer Öffnungsstellung an einem Windschutzscheibenrahmen und zur Festlegung des Verdecks in einer Schließstellung an einem aufbauseitigen Gegenlager;
- Fig. 3: eine vereinfachte dreidimensionale Darstellung eines Verdeckgestänges in einem Zustand kurz vor einer Festlegung an dem aufbauseitigen Gegenlager in einer heckseitigen Ablageposition des Verdecks;
- Fig. 4: eine vereinfachte dreidimensionale Darstellung des Verdeckgestänges der Fig. 3 aus einer weiteren Perspektive;
- Fig. 5: eine vereinfachte dreidimensionale Darstellung des Verdeckgestänges der Fig. 3 und Fig. 4 in einem in der heckseitigen Ablageposition an dem Gegenlager festgelegten Zustand; und
- Fig. 6: eine vereinfachte dreidimensionale Darstellung des Verdeckgestänges der Fig. 5 aus einer weiteren Perspektive.

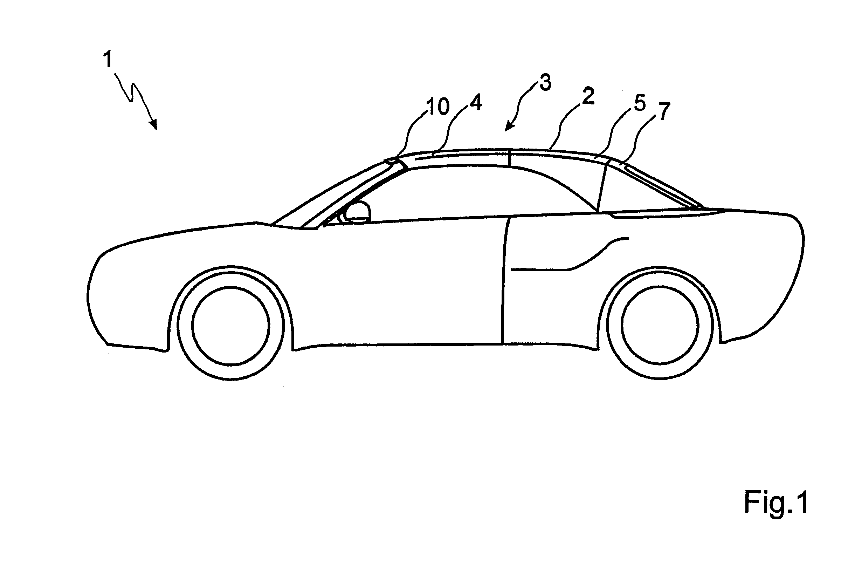

In Fig. 1 ist ein Cabriolet-Fahrzeug 1 mit einem ein faltbares Dach 2 aufweisenden, als Hard-Top-Verdeck ausgebildeten Verdeck 3 gezeigt, welches in einer Schließstellung dargestellt ist.

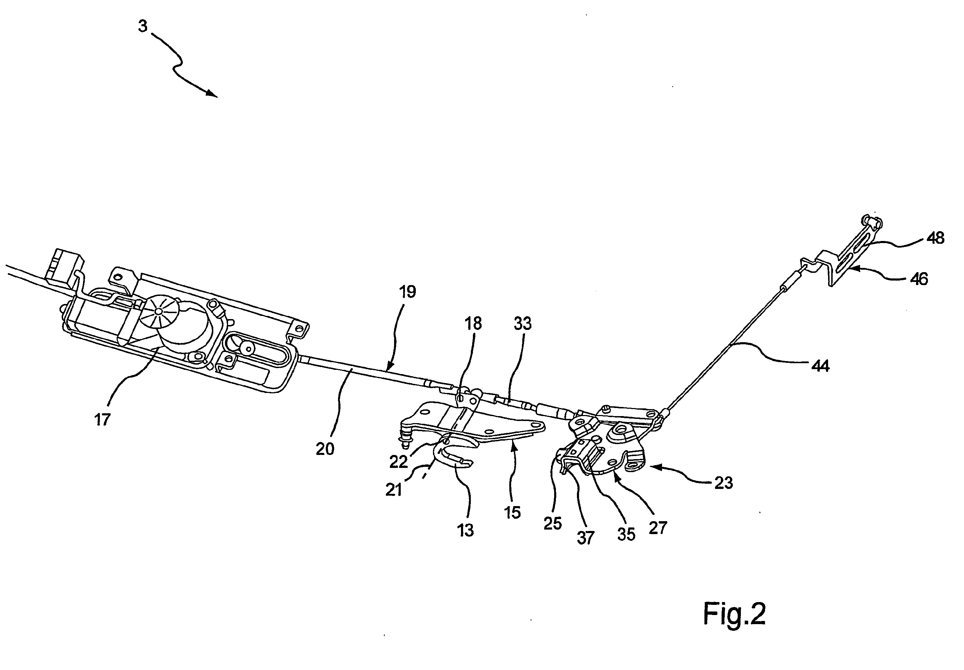

Das Verdeck 3 ist mit drei Dachsegmenten 4, 5, 7 ausgebildet, wobei das vordere Dachsegment 4 in einer Schließstellung des Verdecks 3 an einem Windschutzscheibenrahmen 10 mittels einem in der Fig. 2 ersichtlichen Verschlusshaken 13 einer Verriegelungsvorrichtung 15 festlegbar ist.

Mittels eines Verdeckgestänges 9, welches in einem heckseitigen Bereich des Verdecks 3 an einem zum Befestigen des Verdecks 3 an einer Karosserie des Cabriolet-Fahrzeugs vorgesehenen Hauptlagers 11 des Verdecks 3 angelenkt ist, kann das Verdeck 3 aus einer in der Fig. 1 dargestellten Schließstellung in eine Öffnungsstellung des Verdecks 3, in der das Verdeck 3 in einer heckseitigen Ablageposition abgelegt ist und von der Schließstellung des Verdecks 3 in die Öffnungsstellung des Verdecks 3, überführt werden.

Die im Folgenden verwendeten Begriffe unten, oben, hinten, vorne und mittig beziehen sich jeweils auf das Verdeck 3 des Cabriolet-Fahrzeugs in einem Einbauzustand.

In Fig. 2 ist ein in einem vorderen mittigen Bereich des vorderen Dachsegments 4 angeordnetes, als Mittenantrieb 17 ausgebildetes Antriebsorgan ersichtlich, mittels welchem das Verdeck 3 über eine Betätigung des Verschlusshakens 13 der an dem Verdeck 3 festgelegten Verriegelungsvorrichtung 15 in Schließstellung des Verdecks 3 an dem Windschutzscheibenrahmen 10 festlegbar ist.

Hierzu ist eine Treibstange 20 eines Gestänges 19 an ihrem dem Mittenantrieb 17 abgewandten Ende mit einem dreieckförmigen Gelenkhebel 18 verbunden, wobei der Gelenkhebel 18 über einen Bolzen 22 drehbar an der Verriegelungsvorrichtung 15 festgelegt ist. Der Bolzen 22 ist mit seinem dem Gelenkhebel 18 abgewandten Ende mit dem Verschlusshaken 13 drehfest verbunden.

Zum Festlegen des Verschlusshakens 13 an dem Windschutzscheibenrahmen 10 kann der Mittenantrieb 17 die Treibstange 20 in Verdeckquerrichtung bewegen, so dass der Gelenkhebel 18 an der verdeckfesten Verriegelungsvorrichtung 15 verschwenkt wird. Hieraus resultiert eine Drehung des Bolzens 22 um die Achse 21, welche wiederum den Verschlusshaken 13 verschwenkt und diesen in Verdeckschließstellung mit einem Gegenelement am Windschutzscheibenrahmen 10 in Eingriff bringt. Durch eine Bewegung der Treibstange 20 in umgekehrter Richtung kann der Verschlusshaken 13 von dem Gegenelement am Windschutzscheibenrahmen 10 gelöst werden.

Zur Lagesicherung des Verdecks 3 in einer abgelegten Position ist eine Arretiervorrichtung 23 vorgesehen, welche ein an dem vorderen Dachsegment 4 festlegbares Blechelement 27 und ein an dem Blechelement 27 angelenktes, als Arretierhaken 25 ausgebildetes Arretierelement aufweist.

Das Blechelement 27 ist mit einem u-förmigen Bereich 35 ausgebildet, wobei der Arretierhaken 25 derart an dem Blechelement 27 angelenkt ist, dass der Arretierhaken 25 bei einer von dem Mittenantrieb 17 verursachten Bewegung entweder in eine in einem Schenkel 37 des u-förmigen Bereichs 35 ausgebildete Ausnehmung 39 gedreht oder aus der Ausnehmung 39 herausgedreht werden kann.

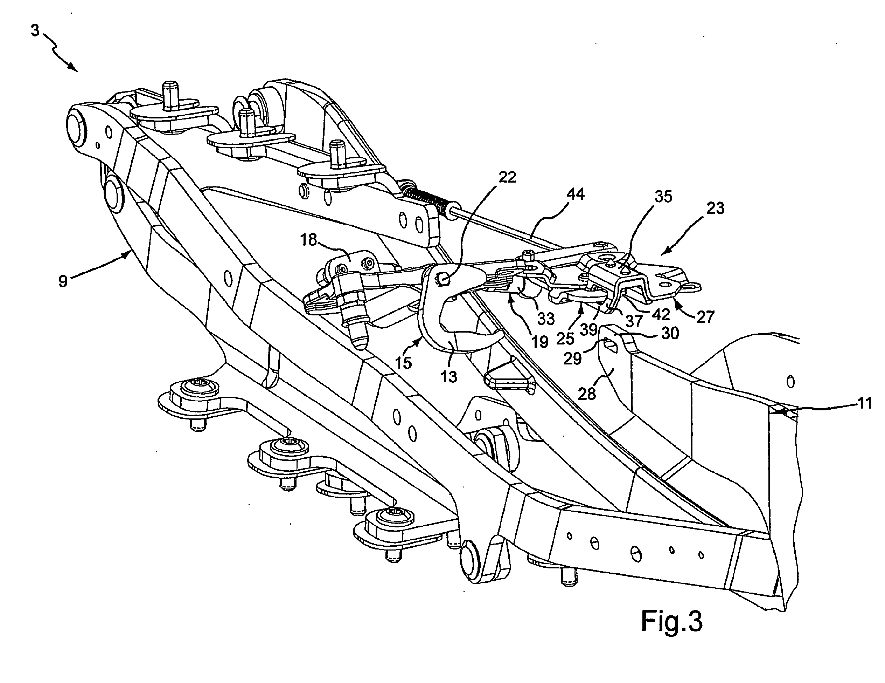

Zur Fixierung des Verdecks 3 in einer Ablageposition des Verdecks 3 kann die Arretiervorrichtung 23 mit einem eine Baueinheit mit dem Hauptlager 11 des Verdeckgestänges 9 bildenden karosseriefesten Gegenlager 28 zusammenwirken, wobei das Gegenlager 28 vorliegend als eine in den Fig. 3 bis 6 ersichtliche verlängerte Wand des Hauptlagers 11 ausgebildet ist und eine zum Zusammenwirken mit dem Arretierhaken 25 der Arretiervorrichtung 23 vorgesehene Ausnehmung 29 aufweist.

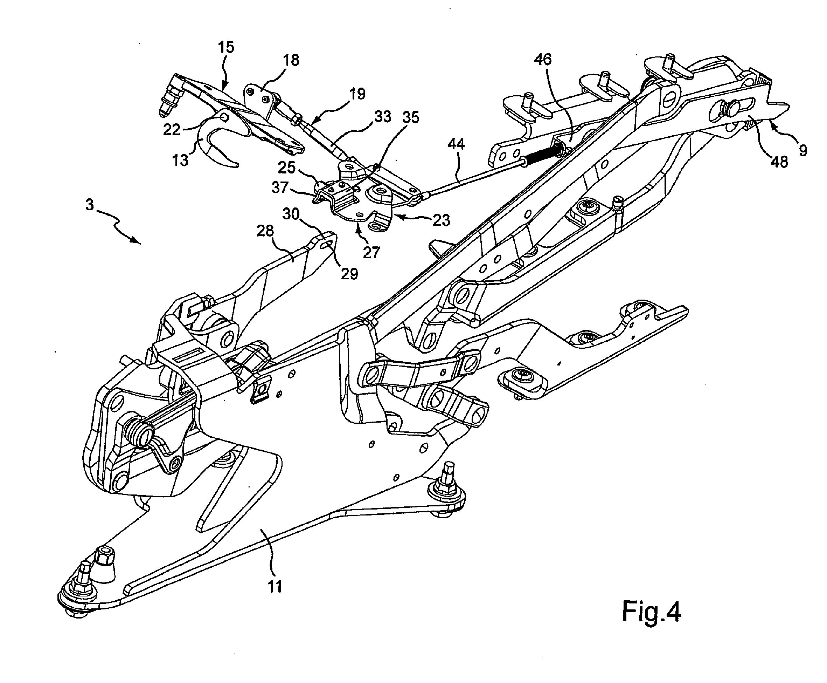

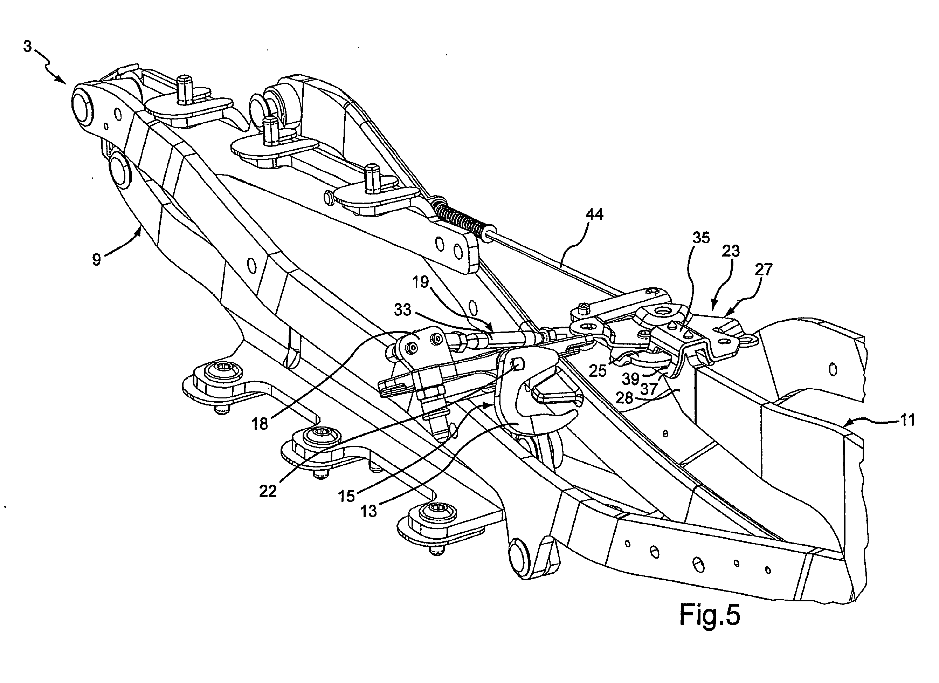

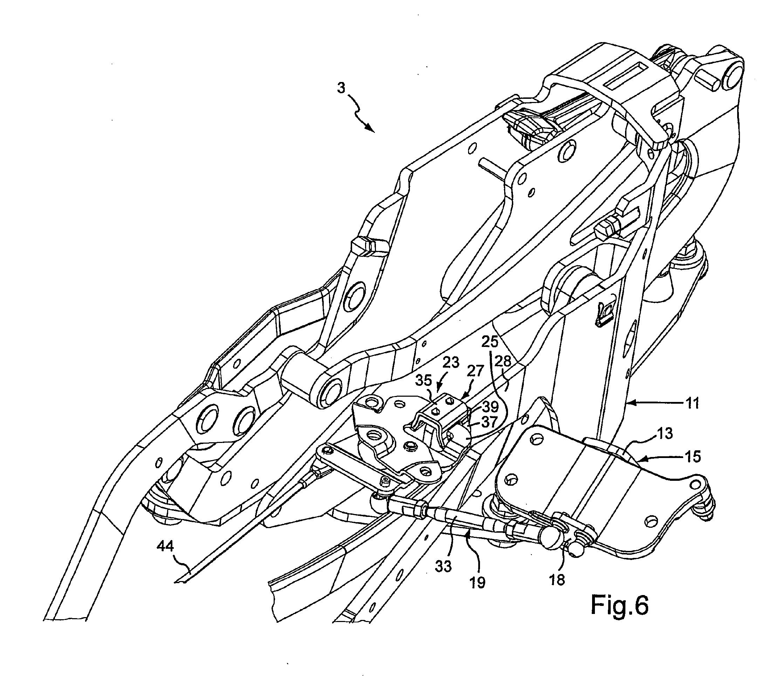

Bei einem Übergang des Verdecks 3 von einer Schließstellung in eine Öffnungsstellung wird das Verdeckgestänge 9 derart bewegt, dass die Arretiervorrichtung 23 entsprechend den Fig. 3 und 4 auf das Gegenlager 28 an dem Hauptlager 11 zubewegt wird bis der u-förmige Bereich 35 des Blechelements 27 mit dem Gegenlager 28 zusammenwirkt und der Arretierhaken 25 der Arretiervorrichtung 23 gemäß den Fig. 5 und 6 in Eingriff mit der Ausnehmung 29 des Gegenlagers 28 bringbar ist.

Zur Festlegung des Verdeckgestänges 9 mittels der Arretiervorrichtung 23 in dem aufbauseitigen Gegenlager 28 ist der Arretierhaken 25 mit einer Koppelstange 33 verbunden, welche an ihrem dem Arretierhaken 25 abgewandten Ende mit dem Gelenkhebel 18 verbunden ist. Durch eine von dem Mittenantrieb 17 ausgelösten Bewegung der Treibstange 20 des Gestänges 19 in Richtung des Mittenantriebs 17 wird der Gelenkhebel 18 um den Bolzen 22 gedreht und bewegt hierdurch die ebenfalls mit dem Gelenkhebel 18 verbundene Koppelstange 33 wenigstens annähernd in Verdeckquerrichtung.

Mittels dieser translatorischen Bewegung der Koppelstange 33 wird der Arretierhaken 25 um seine gelenkige Verbindung mit dem Blechelement 27 entgegen dem Uhrzeigersinn gedreht, so dass ein an der Spitze des Arretierhakens 25 ausgebildetes bolzenartiges Element 42, wie in der Fig. 6 gezeigt, in die Ausnehmung 29 des Gegenlagers 28 gedreht wird.

Das Verdeckgestänge 9 kann in dieser in den Fig. 5 und 6 dargestellten Stellung des Arretierhakens 25 nicht nach oben bewegt werden, da der sich oberhalb der Ausnehmung 29 des Gegenlagers 28 befindliche Bereich 30 von dem bolzenartigen Element 42 des Arretierhakens 25 an einer derartigen Bewegung gehindert wird. Durch die karosseriefeste Festlegung des Verdecks 3 in seiner Ablageposition wird eine hohe Steifigkeit der Festlegung erzielt, was insbesondere in einem Fahrtzustand des Cabriolet-Fahrzeugs vorteilhaft ist.

Zum Lösen des Verdecks 3 aus der gesicherten Ablageposition wird die Treibstange 20 des Gestänges 19 von dem Mittenantrieb 17 in Richtung der Verriegelungsvorrichtung 15 bewegt. Hierdurch wird die Koppelstange 33 über eine Verschwenkung des Gelenkhebels 18 in eine dem Mittenantrieb 17 abgewandte Richtung bewegt und dreht dadurch den Arretierhaken 25 um seine Festlegung an dem Blechelement 27 im Uhrzeigersinn aus der Ausnehmung 29 des Gegenlagers 28 heraus. Das Verdeck 3 kann anschließend von einer Öffnungsstellung in eine Schließstellung überführt werden, da das Verdeckgestänge 9 dann nicht mehr an dem Gegenlager 28 gehalten ist. Das mit dem Blechelement 27 ausgebildete vordere Dachsegment 4 bewegt sich hierbei nach oben von dem an dem Hauptlager 11 angeordneten Gegenlager 28 weg.

In Fig. 2 ist weiterhin eine Verbindungsstange 44 dargestellt, welche an ihrem einen Ende an dem Arretierhaken 25 angelenkt ist und an ihrem anderen, dem Arretierhaken abgewandten Ende mit einem Verriegelungselement 46 verbunden ist.

Das Verriegelungselement 46 weist Langlöcher 48 zur Führung auf, welche in einer Schließstellung des Verdecks 3 mit Bolzen des Dachsegments 5 in Eingriff bringbar sind. Hierzu wird eine von dem Mittenantrieb 17 verursachte Drehung des Arretierhakens 25 in eine Bewegung der Verbindungsstange 44 umgesetzt, mittels welcher die Bolzen der anderen Dachsegmente 4 bzw. 5 mit dem Verriegelungselement 46 verbindbar sind.

Die Verbindung der Dachsegmente 4, 5 kann somit in vorteilhafter Weise mittels des Mittenantriebs 17 realisiert werden.

## Patentansprüche

1. Verdeck für ein Kraftfahrzeug, insbesondere Cabriolet-Fahrzeug, mit einem faltbaren Dach (2), welches mittels eines Verdeckgestänges (9) zwischen einer Schließstellung, in der es an einem Windschutzscheibenrahmen (10) festlegbar ist, und einer Öffnungsstellung, in der es in einer heckseitigen Ablageposition abgelegt ist, verlagerbar ist, wobei zur Festlegung an dem Windschutzscheibenrahmen (10) in Schließstellung eine Verriegelungsvorrichtung (15) mit einem Antriebsorgan (17) und wenigstens einem hiermit über ein Gestänge (19) verbundenen Verschlusshaken (13) vorgesehen ist, und wobei zur Arretierung des Dachs (2) in der heckseitigen Ablageposition eine Arretiervorrichtung (23) vorgesehen ist, wobei die Arretiervorrichtung (23) mit wenigstens einem Arretierelement (25) und einem aufbauseitigen Gegenlager (28) ausgebildet ist, wobei sowohl die Arretiervorrichtung (23) als auch die Verriegelungsvorrichtung (15) von dem Antriebsorgan (17) betätigbar ist, und wobei das Arretierelement (25) der Arretiervorrichtung (23) mittels des Gestänges (19) der Verriegelungsvorrichtung (15) von dem Antriebsorgan (17) betätigbar ist,
**dadurch gekennzeichnet,**
**dass** das Antriebsorgan (17) wenigstens annähernd mittig bezogen auf die Fahrzeugbreite an einem vorderen Ende des Verdecks (3) angeordnet ist, wobei das Arretierelement (25) mittels einer von dem Antriebsorgan (17) betätigbaren Koppelstange (33) betätigbar ist, welche an das wenigstens annähernd in Verdeckquerrichtung verlaufende, das Arretierelement (25) antreibende Gestänge (19) angekoppelt ist.

2. Verdeck für ein Kraftfahrzeug nach Anspruch 1,
**dadurch gekennzeichnet,**
**dass** das mit dem Arretierelement (25) zusammenwirkende, aufbauseitige Gegenlager (28) als eine Baueinheit mit einem Hauptlager (11) des Verdeckgestänges (9) ausgebildet ist, wobei das Arretierelement (25) in der heckseitigen Ablageposition in dem Gegenlager (28) festlegbar ist.

3. Verdeck für ein Kraftfahrzeug nach einem der Ansprüche 1 oder 2,
**dadurch gekennzeichnet,**
**dass** das Arretierelement (25) als Arretierhaken ausgebildet ist.

4. Verdeck für ein Kraftfahrzeug nach Anspruch 3,
**dadurch gekennzeichnet,**
**dass** ein bolzenartiges Element (42) des Arretierhakens (25) in Ablageposition des Verdecks (3) in eine Ausnehmung (29) des Gegenlagers (28) eingreift und diesen in dem Gegenlager (28) festlegt.

5. Verdeck für ein Kraftfahrzeug nach einem der Ansprüche 1 bis 4,
**dadurch gekennzeichnet,**
**dass** die Koppelstange (33) im Wesentlichen koaxial zu einer Treibstange (20) des Gestänges (19), mit der der Verschlusshaken (13) gelenkig verbunden ist, angeordnet ist.

6. Verdeck für ein Kraftfahrzeug nach einem der Ansprüche 1 bis 5,
**dadurch gekennzeichnet,**
**dass** an dem Arretierelement (25) wenigstens eine in Fahrzeuglängsrichtung verlaufende Verbindungsstange (44) angelenkt ist, die an ihrem dem Arretierelement (25) abgewandten Ende ein Verriegelungselement (46) aufweist, mittels dem Dachteile (4, 5, 7) des faltbaren Dachs (2) gegeneinander verriegelbar sind.

## Claims

1. Hood for a motor vehicle, in particular a convertible vehicle, with a foldable roof (2) which is displaceable by means of a hood linkage (9) between a closed position, in which it can be fixed to a windscreen frame (10), and an open position, in which it is stowed in a rear stowage position, wherein a locking device (15) is provided for fixing the roof (2) to the windscreen frame (10) in the closed position, said locking device (15) comprising a drive element (17) and at least one closing hook (13) connected to that via a linkage (19), and wherein a blocking device (23) is provided for blocking the roof (2) in the rear stowage position, said blocking device (23) being provided with at least one blocking element (25) and a counter bearing (28) on the side of the vehicle body, wherein both the blocking device (23) and the locking device (15) can be actuated by the drive element (17), and wherein the blocking element (25) of the blocking device (23) can be actuated by the drive element (17) via the linkage (19) of the locking device (15),
**characterised in that**
the drive element (17) is arranged at least approximately centrally with respect to the vehicle width at a front end of the hood (3), and the blocking element (25) can be actuated by means of a coupling rod (33) which can be actuated by the drive element (17), said coupling rod (33) being coupled to the linkage (19) which extends at least approximately in the transverse direction of the hood and drives the blocking element (25).

2. Hood for a motor vehicle according to claim 1, **characterised in that** the body-side counter bearing (28), which cooperates with the blocking element (25), is provided as a structural unit with a main bearing (11) of the hood linkage (9), said blocking element (25) being fixable in the counter bearing (28) in the rear stowage position.

3. Hood for a motor vehicle according to any one of claims 1 or 2, **characterised in that** the blocking element (25) is provided as a blocking hook.

4. Hood for a motor vehicle according to claim 3, **characterised in that** a bolt-type element (42) of the blocking hook (25) engages in a recess (29) of the counter bearing (28) in the stowage position of the hood (3) and fixes the blocking hook (25) in the counter bearing (28).

5. Hood for a motor vehicle according to any one of claims 1 to 4, **characterised in that** the coupling rod (33) is arranged substantially coaxially with respect to a drive rod (20) of the linkage (19) to which the closing hook (13) is articulated.

6. Hood for a motor vehicle according to any one of claims 1 to 5, **characterised in that** at least one connecting rod (44) extending in the longitudinal direction of the vehicle is articulated to the blocking element (25), said connecting rod (44) comprising a locking element (46) at its end facing away from the blocking element (25), said locking element (46) allowing to lock the roof parts (4, 5, 7) of the foldable roof (2) with respect to each other.

## Revendications

1. Capote pour un véhicule automobile, notamment un véhicule cabriolet, avec un toit pliable (2) qui est déplaçable au moyen d'une tringlerie de capote (9) entre une position de fermeture, dans laquelle ladite capote peut être fixée sur un cadre de pare-brise (10), et une position d'ouverture, dans laquelle ladite capote est rangée dans une position de rangement arrière, un dispositif de verrouillage (15) étant agencé pour fixer le toit (2) sur le cadre de pare-brise (10) dans la position de fermeture, ledit dispositif de verrouillage (15) comprenant un organe d'entraînement (17) et au moins un crochet de fermeture (13) relié à ce dernier par une tringlerie (19), et un dispositif d'arrêt (23) étant agencé pour arrêter le toit (2) dans la position de rangement arrière, ledit dispositif d'arrêt (23) présentant au moins un élément d'arrêt (25) et un palier antagoniste (28) coté carrosserie, le dispositif d'arrêt (23) et le dispositif de verrouillage (15) pouvant être actionnés tous les deux par l'organe d'entraînement (17), et l'élément d'arrêt (25) du dispositif d'arrêt (23) pouvant être actionné par l'organe d'entraînement (17) au moyen de la tringlerie (19) du dispositif de verrouillage (15),
**caractérisé en ce que**
l'organe d'entraînement (17) est disposé au moins environ centralement, par rapport à la largeur du véhicule, à une extrémité avant de la capote (3), et l'élément d'arrêt (25) pouvant être actionné au moyen d'une barre de couplage (33) qui peut être actionnée par l'organe d'entraînement (17), ladite barre de couplage (33) étant reliée à la tringlerie (19) qui s'étend au moins environ dans la direction transversale de la capote et qui entraîne l'élément d'arrêt (25).

2. Capote pour un véhicule automobile selon la revendication 1, **caractérisé en ce que** le palier antagoniste (28) côté carrosserie, qui coopère avec l'élément d'arrêt (25), est réalisé intégralement avec un palier principal (11) de la tringlerie de capote (9), ledit élément d'arrêt (25) pouvant être fixé dans le palier antagoniste (28) en position de rangement arrière.

3. Capote pour un véhicule automobile selon l'une quelconque des revendications 1 ou 2, **caractérisé en ce que** l'élément d'arrêt (25) est réalisé sous forme d'un crochet d'arrêt.

4. Capote pour un véhicule automobile selon la revendication 3, **caractérisé en ce qu'**un élément sous forme d'un boulon (42) du crochet d'arrêt (25) vient en prise dans un évidement (29) du palier antagoniste (28) dans la position de rangement de la capote (3) et fixe ainsi le crochet d'arrêt (25) dans ledit palier antagoniste (28).

5. Capote pour un véhicule automobile selon l'une quelconque des revendications 1 à 4, **caractérisé en ce que** la barre de couplage (33) est disposée sensiblement coaxialement par rapport à une tige d'entraînement (20) de la tringlerie (19) sur laquelle le crochet de fermeture (13) est articulée.

6. Capote pour un véhicule automobile selon l'une quelconque des revendications 1 à 5, **caractérisé en ce qu'**au moins une barre de liaison (44) s'étendant dans la direction longitudinale du véhicule est articulée sur l'élément d'arrêt (25), ladite barre de liaison (44) comprenant un élément de verrouillage (46) à son extrémité détournée du crochet d'arrêt (25), ledit élément de verrouillage (46) permettant de verrouiller les éléments de toit (4, 5, 7) du toit pliable (2) les uns par rapport aux autres.
